Europäisches Patentamt

European Patent Office

Office européen des brevets

(19)

(11) EP 1 736 219 A1

(12) **EUROPEAN PATENT APPLICATION**

(43) Date of publication:
**27.12.2006 Bulletin 2006/52**

(51) Int Cl.:
*B01D 39/20* (2006.01)    *B01D 46/24* (2006.01)
*B01J 35/04* (2006.01)    *F01N 3/28* (2006.01)

(21) Application number: **05028674.9**

(22) Date of filing: **29.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.06.2005 WOPCT/JP2005/011659**

(71) Applicant: **IBIDEN CO., LTD.**
**Ogaki-shi, Gifu-ken 503-8604 (JP)**

(72) Inventors:
  • **Ohno, Kazushige**
    **Ibigawa-cho,**
    **Ibi-gun,**
    **Gifu 501-0695 (JP)**

  • **Kunieda, Masafumi**
    **Ibigawa-cho,**
    **Ibi-gun,**
    **Gifu 501-0695 (JP)**
  • **Ogyu, Kazutake**
    **Ibigawa-cho,**
    **Ibi-gun,**
    **Gifu 501-0695 (JP)**

(74) Representative: **Grünecker, Kinkeldey,**
    **Stockmair & Schwanhäusser**
    **Anwaltssozietät**
    **Maximilianstrasse 58**
    **80538 München (DE)**

(54) **Honeycomb structure**

(57)    A honeycomb structure (10) having multiple honeycomb units (11) united through a seal material layer (14), wherein each honeycomb unit (11) has multiple through holes (12) arranged side by side in a longitudinal direction and separated from each other by the wall surfaces of the through holes (12), is disclosed. The honeycomb units (11) include at least: ceramic particles; and at least one of inorganic fibers and whiskers. At least one of the honeycomb units (11) has a cross section perpendicular to a longitudinal direction thereof, the cross section having an area greater than or equal to 5 cm$^2$ and less than or equal to 50 cm$^2$. For each of the honeycomb units (11), the ratio of the thermal conductivity of the honeycomb unit (11) to the thermal conductivity of the seal material layer (14) falls within the range of 0.2-5.

FIG.1A

EP 1 736 219 A1

**Description**

BACKGROUND OF THE INVENTION

1. Field of the Invention

The present invention relates to a honeycomb structure.

2. Description of the Related Art

Conventionally, a common honeycomb catalyst used for conversion of automotive exhaust gas is manufactured by having a high specific surface area material such as activated alumina and catalyst metal such as platinum carried on the surface of a monolithic cordierite-based honeycomb structure having a low thermal expansion characteristic. Further, alkaline earth metal such as Ba is carried as a $NO_x$ occlusion agent for processing $NO_x$ in an oxygen-excess atmosphere such as a lean-burn engine or a diesel engine. In order to achieve a further improvement in conversion performance, it is necessary to increase the probability of contact of exhaust gas and the catalyst noble metal and the $NO_x$ occlusion agent. This requires the carrier to have a higher specific surface area and the particles of the noble metal to be reduced in size and highly dispersed. However, a mere increase in the carried amount of a high specific surface area material such as activated alumina only results in an increase in the thickness of the alumina layer, thus causing a problem in that the probability of contact is not increased or that pressure loss is too high. Accordingly, some modifications have been made on cell shape, cell density, and wall thickness (for example, see JP-A 10-263416). On the other hand, as a honeycomb structure formed of a high specific surface area material, a honeycomb structure formed by extrusion molding using a composition including inorganic fibers and an inorganic binder is known (for example, see JP-A 5-213681). Further, a honeycomb structure formed by joining honeycomb units through an adhesion layer in order to increase the size of such a honeycomb structure is known (for example, see DE 4341159 A1).

However, the above-described conventional techniques have the following problems. In a high specific surface area material such as alumina, sintering progresses because of thermal aging, so that its specific surface area decreases. With this, a catalyst metal such as platinum carried thereon coheres so as to increase in particle size and decrease in specific surface area. That is, in order for the specific surface area to be high after thermal aging (use as a catalyst carrier)', the specific surface area should be high at the initial stage. Further, as described above, it is necessary to increase the probability of contact of exhaust gas and a catalyst noble metal and a $NO_x$ occlusion agent in order to achieve a further improvement in conversion performance. In other words, it is important that the carrier have a higher specific surface area and that the particles of the catalyst metal be reduced in size and more highly dispersed. In a cordierite-based honeycomb structure having a high specific surface area material such as activated alumina and catalyst metal such as platinum carried on the surface thereof as disclosed in JP-A 10-263416, in order to increase the probability of contact with exhaust gas, modifications have been made on cell shape, cell density, and wall thickness so that the catalyst carrier has a high specific surface area. However, the specific surface area is not high enough. Therefore, the catalyst metal is not dispersed highly enough, so that the exhaust gas conversion performance after thermal aging is insufficient. Therefore, in order to compensate for this insufficiency, it has been performed to carry a large amount of catalyst metal or increase the size of the catalyst carrier itself. However, noble metals such as platinum are very expensive, and limited valuable resources. Further, in the case of installation in automobiles, the installation space is extremely limited. Accordingly, neither measure is considered appropriate.

Further, in the honeycomb structure of JP-A 5-213681, into which a high specific surface area material, together with inorganic fibers and an inorganic binder, is formed by extrusion molding, the base material itself is formed of a high specific surface area material. Accordingly, the honeycomb structure also has a high specific surface area as a carrier, thus allowing catalyst metal to be dispersed highly enough. However, in order to maintain the specific surface area, alumina or the like of the base material is prevented from being sintered sufficiently. Therefore, the strength of the base material is extremely low. Further, as described above, in the case of use for automobiles, the installation space is extremely limited. Therefore, measures such as reduction in the thickness of partition walls are taken in order to increase the specific surface area of the carrier per unit volume. However, the strength of the base material is reduced all the more for this. Further, alumina or the like has a high coefficient of thermal expansion, and accordingly, cracks are formed easily because of a thermal stress when subjected to firing (calcination) and when used. Considering these, there is a problem in that in the case of automobile use, thermal stress due to a sudden change in temperature and external force such as great vibration are applied at the time of usage, so that the honeycomb structure breaks easily and cannot maintain the shape as a honeycomb structure, thus being unable to function as a catalyst carrier.

Further, in the catalyst carrier for automobiles disclosed in DE 4341159 A1, which has an object of increasing the size of a honeycomb structure, a honeycomb unit having a cross-sectional area greater than or equal to 200 $cm^2$ is shown. However, there is a problem in that, as described above, the honeycomb structure breaks easily and cannot maintain its shape, thus being unable to function as a catalyst carrier, when used in a situation where thermal stress due to a sudden change in temperature and great vibration are applied.

Further, in the honeycomb structure formed by joining multiple honeycomb units with a seal material layer, the honeycomb units and the seal material layer are different in characteristics such as a coefficient of thermal expansion and thermal conductivity because, in general, the honeycomb units and the seal material layer are different in material and/or composition. Accordingly, there is a problem in that if a temperature distribution is generated in the honeycomb structure during its use so that thermal stress or thermal shock is applied thereto, the honeycomb structure breaks.

SUMMARY OF THE INVENTION

Accordingly, it is a general object of the present invention to provide a honeycomb structure in which the above-described disadvantages are eliminated.

A more specific object of the present invention is to provide a honeycomb structure capable of achieving high dispersion of a catalyst component and increasing strength against thermal shock and vibration.

The above objects of the present invention are achieved by a honeycomb structure having a plurality of honeycomb units united through a seal material layer, the honeycomb units each having a plurality of through holes arranged side by side in a longitudinal direction and separated from each other by wall surfaces of the through holes, wherein the honeycomb units comprise at least ceramic particles and inorganic fibers and/or whiskers, at least one of the honeycomb units has a cross section perpendicular to a longitudinal direction thereof, the cross section having an area greater than or equal to 5 cm$^2$ and less than or equal to 50 cm$^2$, and for each of the honeycomb units, a ratio of a thermal conductivity of the honeycomb unit to a thermal conductivity of the seal material layer falls within a range of 0.2-5.

Thus, according to one embodiment of the present invention, a honeycomb structure capable of achieving high dispersion of a catalyst component and increasing strength against thermal shock and vibration may be provided.

BRIEF DESCRIPTION OF THE DRAWINGS

Other objects, features and advantages of the present invention will become more apparent from the following detailed description when read in conjunction with the accompanying drawings, in which:

FIG. 1A is a conceptual diagram showing a honeycomb structure according to an embodiment of the present invention;
FIG. 1B is a conceptual diagram showing a honeycomb unit according to the embodiment of the present invention;
FIG. 2 is an SEM photograph of the wall surface of the honeycomb unit according to the embodiment of the present invention;
FIG. 3A is a diagram for illustrating experimental examples in which the honeycomb units were joined according to the embodiment of the present invention;
FIG. 3B is a diagram for illustrating other experimental examples in which the honeycomb units were joined according to the embodiment of the present invention;
FIG. 3C is a diagram for illustrating other experimental examples in which the honeycomb units were joined according to the embodiment of the present invention;
FIG. 3D is a diagram for illustrating other experimental examples in which the honeycomb units were joined according to the embodiment of the present invention;
FIG. 4A is a diagram for illustrating other experimental examples in which the honeycomb units were joined according to the embodiment of the present invention;
FIG. 4B is a diagram for illustrating other experimental examples in which the honeycomb units were joined according to the embodiment of the present invention;
FIG. 4C is a diagram for illustrating other experimental examples of the honeycomb unit according to the embodiment of the present invention;
FIG. 5A is a front view of a vibration apparatus according to the embodiment of the present invention;
FIG. 5B is a side view of the vibration apparatus according to the embodiment of the present invention;
FIG. 6 is a diagram for illustrating a pressure loss measuring apparatus according to the embodiment of the present invention;
FIG. 7 is a graph showing the relationship between the cross-sectional area of the honeycomb unit and each of weight reduction rate and pressure loss according to the embodiment of the present invention;
FIG. 8 is a graph showing the relationship between unit area ratio and each of weight reduction rate and pressure loss according to the embodiment of the present invention; and
FIG. 9 is a graph showing the relationship between the aspect ratio of silica-alumina fibers and weight reduction rate according to the embodiment of the present invention.

DETAILED DESCRIPTION OF THE PREFERRED EMBODIMENTS

Next, a description is given, with reference to the accompanying drawings, of an embodiment of the present invention.

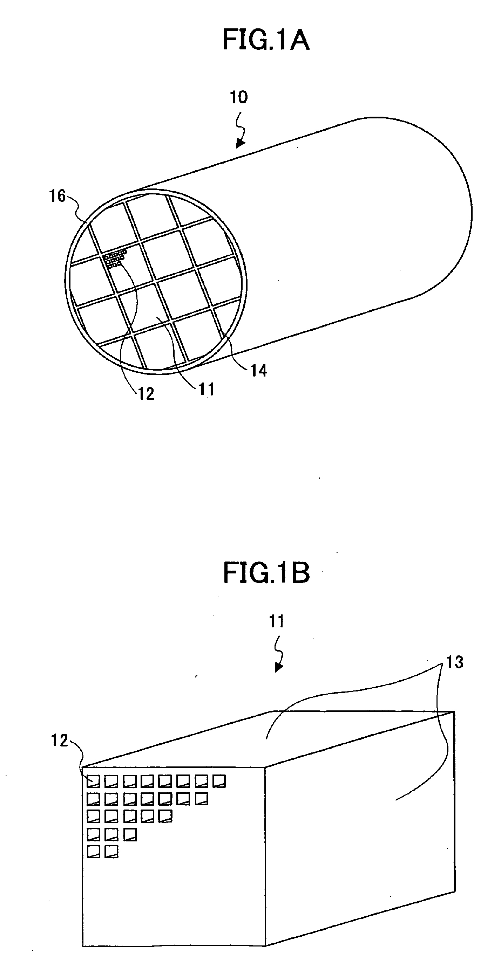

FIG. 1A is a conceptual diagram of a honeycomb structure 10 according to the embodiment of the present invention. Referring to FIG. 1A, the honeycomb structure 10 according to this embodiment is formed by uniting multiple honeycomb units 11 through a seal material layer 14. Each honeycomb unit 11 has multiple through holes 12 arranged side by side in a longitudinal direction, being separated by through hole wall surfaces. Each honeycomb unit 11 includes at least ceramic particles and inorganic fibers and/or whiskers. The area of a cross section of the honeycomb unit 11 perpendicular to a longitudinal direction thereof is greater than or equal to 5 cm$^2$ and less than or equal to 50 cm$^2$. The ratio of the thermal conductivity $\kappa$1 of the honeycomb unit 11 to the thermal conductivity $\kappa$2 of the seal material layer 14 ($\kappa$1/$\kappa$2) falls within the range of 0.2-5.

This honeycomb structure 10 has the multiple honeycomb units 11 joined through the seal material layer 14. Accordingly, it is possible to increase strength against thermal shock and vibration. It is inferred that this is because it is possible to reduce a difference in temperature in each honeycomb unit 11 even when there is a distribution of temperature in the honeycomb structure 10 because of a sudden change in temperature, or because it is possible to ease thermal shock and vibration with the seal material layer 14. Further, it is believed that also in the case of formation of cracks in one or more of the honeycomb units 11 due to thermal stress, the seal material layer 14 prevents the cracks from extending to the entire honeycomb structure 10 and serves as the frame of the honeycomb structure 10 to maintain the shape as a honeycomb structure, thereby preventing the honeycomb structure 10 from losing the ability to function as a catalyst carrier. With respect to the size of each honeycomb unit 11, if the area of a cross section of the honeycomb unit 11 perpendicular to its through holes 12 (hereinafter, simply referred to as "cross-sectional area") is less than 5 cm$^2$, the cross-sectional area of the seal material layer 14 joining the multiple honeycomb units 11 increases so as to relatively reduce the specific surface area carrying a catalyst and relatively increase pressure loss. On the other hand, if the cross-sectional area of the honeycomb unit 11 exceeds 50 cm$^2$, the honeycomb unit 11 is too large in size to sufficiently control thermal stress generated therein. That is, with a cross-sectional area of 5-50 cm$^2$, each honeycomb unit 11 is at a practicable level, having reduced pressure loss, sufficient strength against thermal stress, and high durability while maintaining large specific surface area. Therefore, according to this honeycomb structure 10, it is possible to cause a catalyst component to be highly dispersed, and to increase strength against thermal shock and vibration. If the honeycomb structure 10 includes multiple types of honeycomb units having different cross-sectional areas, the term "cross-sectional area" refers to the cross-sectional area of a honeycomb unit that is a basic unit of the honeycomb structure 10, and usually refers to the largest one of the cross-sectional areas of the honeycomb units.

Further, in the honeycomb structure 10 of this embodiment, the ratio of the thermal conductivity $\kappa$1 of the honeycomb unit 11 to the thermal conductivity $\kappa$2 of the seal material layer 14 ($\kappa$1/$\kappa$2) is controlled. That is, if $\kappa$1/$\kappa$2 is too small, $\kappa$1 is small or $\kappa$2 is large. Accordingly, the seal material layer 14 is less likely to make a contribution as a heat insulator, so that heat is easily transferable to an adjacent honeycomb unit 11 through the seal material layer 14. As a result, the temperature distribution in the honeycomb unit 11 increases. On the other hand, if $\kappa$1/$\kappa$2 is too large, $\kappa$1 is large or $\kappa$2 is small, so that a great temperature distribution is generated in the seal material layer 14. Accordingly, a crack is caused easily in the main body of the honeycomb unit 11 in the former case and in the seal material layer 14 in the latter case by thermal stress or thermal shock. This leads to the breakage of the honeycomb structure 10. On the other hand, according to this embodiment of the present invention, $\kappa$1/$\kappa$2 is controlled to the range of 0.2-5, so that the honeycomb structure 10 has a relatively uniform temperature distribution. Accordingly, the honeycomb structure 10 excellent in durability against thermal stress or thermal shock can be obtained.

It is possible to control $\kappa$1/$\kappa$2 by suitably selecting the material, component mixture ratio, particle size, etc., of the honeycomb units 11 and those of the seal material layer 14.

The ratio of the total of the cross-sectional areas of the honeycomb units 11 (the areas of cross sections of the honeycomb units 11 perpendicular to a longitudinal direction thereof) to the cross-sectional area of the honeycomb structure 10 (the area of a cross section of the honeycomb structure 10 perpendicular to a longitudinal direction thereof) is preferably greater than or equal to 85%, and more preferably, greater than or equal to 90%. If this ratio is less than 85%, the cross-sectional area of the seal material layer 14 increases so as to reduce the total cross-sectional area of the honeycomb units 11. Therefore, the specific surface area carrying a catalyst is relatively reduced, and pressure loss is relatively increased. When this ratio is greater than or equal to 90%, it is possible to further reduce pressure loss.

The honeycomb structure 10 according to this embodiment may include a coating material layer 16 (FIG. 1A) coating the exterior axial surface (exterior cylindrical surface in the case of FIG. 1A) of the joint body of the honeycomb units 11, or the exterior surface of the joint body of the honeycomb units 11 which surface is along the axial directions of the joint body. This protects the exterior cylindrical surface of the honeycomb structure 10, so that its strength can be increased.

The honeycomb structure 10 into which the honeycomb units 11 are joined is not limited in shape in particular, and may have any shape and size. For example, the honeycomb structure 10 may also be shaped like a cylinder, a prism, or an elliptic cylinder.

In the honeycomb structure 10 of this embodiment, the aspect ratio of inorganic fibers and/or whiskers included in each honeycomb unit 11 is preferably 2 to 1000, more preferably, 5 to 800, and most preferably, 10 to 500. If the aspect ratio of inorganic fibers and/or whiskers is less than 2, their contribution to an increase in the strength of the honeycomb structure may be reduced. On the other hand, aspect ratios greater than 1000 are likely to cause clogging of a die for extrusion molding at the time of molding, which may result in poor moldability. Further, at the time of molding such as extrusion molding, the inorganic fibers and/or whiskers may be broken so as to vary in length, thus reducing their contribution to an increase in the strength of the honeycomb structure 10. If the inorganic fibers and/or whiskers have their aspect ratios distributed, the aspect ratio of inorganic fibers and/or whiskers may be their average.

In the honeycomb structure 10 of this embodiment, the ceramic particles included in each honeycomb unit 11 are not limited in particular. The ceramic particles include one or more selected from, for example, alumina, silica, zirconia, titania, ceria, mullite, and zeolite. Of these, alumina is preferred.

In the honeycomb structure 10 of this embodiment, the inorganic fibers and/or whiskers included in each honeycomb unit 11 are not limited in particular. The inorganic fibers and/or whiskers include one or more selected from alumina, silica, silicon carbide, silica alumina, aluminum borate, glass, and potassium titanate.

The ceramic particles included in the honeycomb structure 10 are preferably 30-97 wt%, more preferably 30-90 wt%, still more preferably 40-80 wt%, and most preferably 50-75 wt% in amount. If the ceramic particles content is less than 30 wt%, the ceramic particles contributing to an increase in the specific surface area are relatively reduced in amount. This reduces the specific surface area as a honeycomb structure so as to prevent a catalyst component from being carried with high dispersion. If the ceramic particles content exceeds 90 wt%, the inorganic fibers and/or whiskers contributing to an increase in strength are relatively reduced in amount, thus reducing the strength of the honeycomb structure 10.

The inorganic fibers and/or whiskers included in the honeycomb structure 10 are preferably 3-70 wt%, more preferably 3-50 wt%, still more preferably 5-40 wt%, and most preferably 8-30 wt% in amount. If the inorganic fibers and/or whiskers content is less than 3 wt%, the strength of the honeycomb structure 10 is reduced. If the inorganic fibers and/or whiskers content exceeds 50 wt%, the ceramic particles contributing to an increase in the specific surface area are relatively reduced in amount. This reduces the specific surface area as a honeycomb structure so as to prevent a catalyst component from being carried with high dispersion.

In the honeycomb structure 10 of this embodiment, each honeycomb unit 11 may also be manufactured with further inclusion of an inorganic binder. This makes it possible to obtain sufficient strength even when firing is performed on the honeycomb unit 11 at lower temperatures. The inorganic binder included in the honeycomb structure 10 is not limited in particular. The inorganic binder may be, for example, inorganic sol, a clay-based binder, etc. Of these, the inorganic sol includes one or more selected from, for example, alumina sol, silica sol, titania sol, and water glass. The clay-based binder includes one or more selected from, for example, clay, kaolin, montmonrillonite, and clays of a double-chain structure type (sepiolite and attapulgite). The inorganic binder included in the material of the honeycomb structure 10 is preferably less than or equal to 50 wt%, more preferably 5-50 wt%, still more preferably 10-40 wt%, and most preferably 15-35 wt% in amount as a solid content included in the honeycomb structure 10. If the inorganic binder content exceeds 50 wt% in amount, moldability is degraded.

The shape of each honeycomb unit 11 is not limited in particular. Preferably, the honeycomb units 11 are shaped so as to facilitate joining of the honeycomb units 11. A section of the honeycomb unit 11 perpendicular to the through holes 12 (hereinafter, simply referred to as "cross section") may be square, rectangular, hexagonal, or fan-shaped. FIG. 1B is a conceptual diagram of an example of the honeycomb units 11, which is a parallelepiped one having a square cross section. Referring to FIG. 1B, the honeycomb unit 11 includes the multiple through holes 12 extending from the front side to the rear side, and an exterior surface 13 having no openings of the through holes 12. The thickness of the wall between the through holes 12 is not limited in particular. The wall thickness is preferably 0.05-0.35 mm, more preferably 0.10-0.30 mm, and most preferably 0.15-0.25 mm. If the wall thickness is less than 0.05 mm, the strength of the honeycomb unit 11 is reduced. On the other hand, if the wall thickness exceeds 0.35 mm, the area of contact with exhaust gas is reduced and the exhaust gas is prevented from penetrating sufficiently deeply, so that a catalyst carried on the inside of the wall is less likely to come into contact with the exhaust gas, thus degrading catalyst performance. Further, the number of through holes 12 per unit cross-sectional area is preferably 15.5-186/cm$^2$ (100-1200 cpsi), more preferably 46.5-170.5/cm$^2$ (300-1100 cpsi), and most preferably 62.0-155/cm$^2$ (400-1000 cpsi). If the number of through holes 12 is less than 15.5/cm$^2$, the area of the wall inside the honeycomb unit 11 which wall contacts exhaust gas is reduced. If the number of through holes 12 exceeds 186/cm$^2$, pressure loss is increased, and it is difficult to manufacture the honeycomb unit 11.

The shape of the through holes 12 formed in the honeycomb unit 11 is not limited in particular. The through holes 12 may also have substantially triangular or hexagonal cross sections.

Each honeycomb unit 11 forming the honeycomb structure 10 may be of such size as to have a cross-sectional area of preferably 5-50 cm$^2$, more preferably 6-40 cm$^2$, and most preferably 8-30 cm$^2$. If the cross-sectional area falls within the range of 5-50 cm$^2$, it is possible to control the ratio of the seal material layer 14 to the honeycomb structure 10. This makes it possible to keep high the specific surface area per unit volume of the honeycomb structure 10, and accordingly, to have a catalyst component highly dispersed. This also makes it possible to maintain the shape as a honeycomb structure even if an external force such as thermal shock or vibration is applied. The specific surface area per unit volume can be given by Eq. (1) described below.

Next, a description is given of a method of manufacturing the above-described honeycomb structure 10 of this embodiment. First, honeycomb unit molded bodies are made by extrusion molding using raw material paste including the above-described ceramic particles, inorganic fibers and/or whiskers, and inorganic binder as principal components. In addition to these, an organic binder, a dispersion medium, and a molding aid may be added appropriately to the raw material paste in accordance with moldability. The organic binder is not limited in particular. The organic binder includes one or more selected from, for instance, methylcellulose, carboxymethylcellulose, hydroxyethylcellulose, polyethylene glycol, phenolic resin, and epoxy resin. The mix proportion of the organic binder is preferably 1-10 parts by weight to the total of 100 parts by weight of the ceramic particles, the inorganic fibers and/or whiskers, and the inorganic binder. The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, and polyalcohol.

The raw material paste is not limited in particular. It is preferable to mix and knead the raw material paste. For example, the raw material paste may be mixed using a mixer or attritor, and may be well kneaded with a kneader. The method of molding the raw material paste is not limited in particular. Preferably, the raw material paste is formed into a shape having through holes by, for example, extrusion molding or the like.

Next, it is preferable to dry the obtained molded bodies. The drier used for drying is not limited in particular, and may be a microwave drier, hot air drier, dielectric drier, reduced-pressure drier, vacuum drier, and freeze drier. Further, it is preferable to degrease the obtained molded bodies. The conditions for degreasing are not limited in particular, and are selected suitably in accordance with the organic matter included in the molded bodies. Preferably, the conditions are a heating temperature of approximately 400°C and a heating time of approximately 2 hours. Further, it is preferable to subject the obtained molded bodies to firing. The condition for firing is not limited in particular, and is preferably at 600-1200°C, and more preferably at 600-1000°C. This is because sintering of the ceramic particles does not progress at firing temperatures lower than 600°C, thus resulting in reduced strength as a honeycomb structure, and because sintering of the ceramic particles progresses excessively at firing temperatures over 1200°C so as to reduce the specific surface area per unit volume, thus preventing a carried catalyst component from being dispersed highly enough. By way of these processes, the honeycomb units 11 each having the multiple through holes 12 can be obtained.

Next, the paste of a seal material to serve as the seal material layer 14 is applied on the obtained honeycomb units 11, and the honeycomb units 11 are successively joined. Thereafter, the honeycomb units 11 may be dried and solidified so as to be formed into a honeycomb unit joint body of a predetermined size. The seal material is not limited in particular. For example, a mixture of an inorganic binder and ceramic particles, a mixture of an inorganic binder and inorganic fibers, and a mixture of an inorganic binder, ceramic particles, and inorganic fibers may be used as the seal material. An organic binder may be added to these seal materials. The organic binder is not limited in particular, and includes one or more selected from, for example, polyvinyl alcohol, methylcellulose, ethylcellulose, and carboxymethylcellulose.

The seal material layer 14 joining the honeycomb units 11 is preferably 0.3-2 mm in thickness. If the seal material layer 14 is less than 0.3 mm in thickness, sufficient joining strength may not be obtained. Further, the seal material layer 14 is a part that does not function as a catalyst carrier. Accordingly, if the seal material layer 14 exceeds 2 mm in thickness, the specific surface area per unit volume of the honeycomb structure 10 is reduced, thus preventing a catalyst component from being carried with sufficiently high dispersion. On the other hand, if the seal material layer 14 exceeds 2 mm in thickness, pressure loss may be increased. The number of honeycomb units 11 to be joined may be determined suitably in accordance with the size of the honeycomb structure 10 to be used as a honeycomb catalyst. Further, the joint body into which the honeycomb units 11 are joined with the seal material may also be cut and ground suitably in accordance with the shape and size of the honeycomb structure 10.

The coating material layer 16 may be formed by applying a coating material on the exterior cylindrical surface (side surface) of the joint body of the honeycomb units 11, and drying and solidifying the coating material. This makes it possible to increase strength by protecting the exterior cylindrical surface of the honeycomb structure 10. The coating material is not limited in particular, and may be either equal to or different from the seal material in material. Further, the coating material may be equal to or different from the seal material in compounding ratio. The thickness of the coating material layer 16 is not limited in particular, and is preferably 0.1-2 mm. With thicknesses less than 0.1 mm, the coating material layer 16 may not be able to protect the exterior cylindrical surface of the honeycomb structure 10 completely, thus failing to increase its strength. If the coating material layer 16 exceeds 2 mm in thickness, the specific surface area per unit volume as a honeycomb structure is reduced so as to prevent a catalyst component from being carried with sufficiently high dispersion.

It is preferable to perform calcination after joining the multiple honeycomb units 11 with the seal material (or after the coating material layer 16 is formed in the case of providing the coating material layer 16). This is because if an organic binder is included in the seal material or the coating material, the organic material can be removed by degreasing. The conditions for calcination may be determined suitably in accordance with the type and amount of the included organic binder. Preferably, the calcination is performed for 2 hours at approximately 700°C. Referring back to FIG. 1A, as an example honeycomb structure, the honeycomb structure 10 of this embodiment is formed so as to have a cylindrical shape by joining the multiple parallelepiped honeycomb units 11 each having a square cross section. The honeycomb structure 10 is formed by joining the honeycomb units 11 with the seal material layer 14, cutting the joined honeycomb units 11 into a cylindrical shape, and thereafter, coating the exterior cylindrical surface of the joint body of the honeycomb units 11 with the coating material layer 16. The unevenness of the exterior cylindrical surface of the joint body of the honeycomb units 11 due to the cutting or grinding is eliminated by filling the concave parts of the exterior cylindrical surface with the coating material layer 16. The concave parts of the exterior surface may not be filled with the coating material layer 16. Alternatively, the honeycomb units 11 may be molded so as to have fan-shaped and square cross sections, and joined into a predetermined honeycomb structure shape (a cylindrical shape in FIG. 1A), thereby omitting the cutting and grinding process.

The obtained honeycomb structure 10 is not limited to a particular use. It is preferable to use the obtained honeycomb structure 10 as a catalyst carrier for converting the exhaust gas of vehicles. In the case of using the honeycomb structure 10 as a catalyst carrier for converting the exhaust gas of a diesel engine, the honeycomb structure 10 is used with a diesel particulate filter (DPF) having a ceramic honeycomb structure of silicon carbide or the like and having the function of purifying the exhaust gas by filtering out and burning particulate matter (PM) therein. In this case, the positional relationship between the honeycomb structure 10 of this embodiment and the DPF is such that the honeycomb structure 10 of this embodiment may be provided either on the preceding stage side or on the subsequent stage side. In the case of providing the honeycomb structure 10 on the preceding stage side, it is possible to transfer heat generated in the honeycomb structure 10 to the DPF on the subsequent stage side effectively with reduced heat loss since the seal material layer 14 of the honeycomb structure 10 has a sufficiently high thermal conductivity. Accordingly, it is possible to cause a uniform rise in temperature at the time of regeneration of the DPF, thus improving the regeneration rate of the DPF. In the case of providing the honeycomb structure 10 on the subsequent stage side, the exhaust gas passes through the through holes 12 of the honeycomb structure 10 after the PM in the exhaust gas is filtered out by the DPF. Accordingly, clogging is less likely to occur in the honeycomb structure 10. Further, a gas component generated by incomplete combustion at the time of burning the PM in the DPF can also be processed using the honeycomb structure 10 of this embodiment. The honeycomb structure 10 may be used for the purpose described above with reference to the background of the present invention. In addition, the honeycomb structure 10 may also be applied to, but is not limited in particular to, use without carrying a catalyst component (for example, as an adsorbent adsorbing a gas component or a liquid component).

Further, the obtained honeycomb structure 10 may be made a honeycomb catalyst by having a catalyst component carried thereon. The catalyst component is not limited in particular, and may be noble metal, alkali metal, alkaline earth metal, oxide, etc. The noble metal includes one or more selected from, for example, platinum, palladium, and rhodium. The alkali metal includes one or more selected from, for example, potassium and sodium. Examples of the alkaline earth metal include one formed of barium, etc. Examples of the oxide include perovskite (such as $La_{0.75}K_{0.25}MnO_3$) and $CeO_2$. The obtained honeycomb catalyst is not limited to a particular use, and may be used as, for example, a so-called three-way catalyst or a $NO_x$ occlusion catalyst for converting automobile exhaust gas. There is no particular limitation with respect to the carrying of a catalyst component. The catalyst component may be carried either after manufacturing the honeycomb structure 10 or at the stage of raw material ceramic particles. The method of carrying a catalyst component is not limited in particular, and may be, for example, impregnation.

[Examples]

A description is given below of the specific cases of manufacturing honeycomb structures under various conditions as experimental examples. The present invention is not limited to these experimental examples.

[Example 1]

First, 40 wt% of γ-alumina particles (2 μm in average particle size), 10 wt% of silica-alumina fibers (10 μm in average fiber diameter, 100 μm in average fiber length, and of an aspect ratio of 10), and 50 wt% of silica sol (of a solid concentration of 30 wt%) were mixed. Six parts by weight of methylcellulose as an organic binder was added, together with small amounts of a plasticizer and lubricant, to 100 parts by weight of the obtained mixture. The mixture was further mixed and kneaded, so that a mixture composition was obtained. Next, the mixture composition was subjected to extrusion molding by an extruder, so that crude molded bodies were obtained.

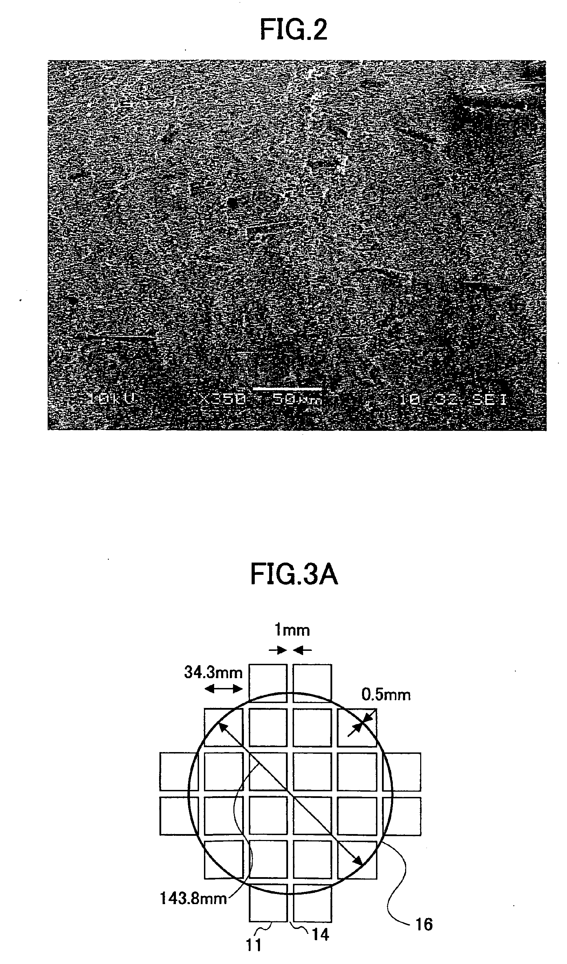

The crude molded bodies were sufficiently dried using a microwave drier and a hot air drier, and were degreased, being heated at 400°C for 2 hours. Thereafter, the molded bodies were subjected to firing, being heated at 800°C for 2 hours. As a result, the honeycomb units 11 each having a prism-like shape (34.3 mm × 34.3 mm × 150 mm), a cell density of 93/cm$^2$ (600 cpsi), a wall thickness of 0.2 mm, and a quadrangular (square) cell shape were obtained. FIG. 2 shows a scanning electron microscope (SEM) photograph of the wall surface of one of the honeycomb units 11. This shows that silica-alumina fibers are oriented along the extrusion direction of the raw material paste in this honeycomb unit 11.

Next, 29 wt% of γ-alumina particles (2 μm in average particle size), 7 wt% of silica-alumina fibers (10 μm in average fiber diameter and 100 μm in average fiber length), 34 wt% of silica sol (of a solid concentration of 30 wt%), 5 wt% of carboxymethylcellulose, and 25 wt% of water were mixed into heat-resisting seal material paste. The honeycomb units 11 were joined using this seal material paste. FIG. 3A shows a joint body into which the honeycomb units 11 are joined, viewed from a surface thereof on which the through holes 12 are formed (hereinafter referred to as "front surface"). This joint body was formed by joining and solidifying the honeycomb units 11 with the seal material paste being applied on the exterior surfaces 13 of the honeycomb units 11 so that the seal material layer 14 was 1 mm in thickness. The joint body was thus made, and the joint body was cut cylindrically using a diamond cutter so that the front surface of the joint body was substantially symmetric about a point. Further, the above-described seal material paste was applied on the exterior cylindrical surface on which no through holes were formed so as to be 0.5 mm in thickness, thereby coating the exterior cylindrical surface. Thereafter, the obtained structure was dried at 120°C, and the seal material layer 14 and the coating material layer 16 were degreased while heating the structure at 700°C for 2 hours. As a result, the honeycomb structure 10 having a cylindrical shape (143.8 mm in diameter and 150 mm in length) was obtained. Table 1 shows a collection of data such as numerical values on the ceramic particle component, unit shape, unit cross-sectional area, unit area ratio (the ratio of the total cross-sectional area of the honeycomb units 11 to the cross-sectional area of the honeycomb structure 10, which applies hereinafter), and seal material layer area ratio (the ratio of the total cross-sectional area of the seal material layer 14 and the coating material layer 16 to the cross-sectional area of the honeycomb structure 10, which applies hereinafter) of this honeycomb structure 10.

Table 1

| SAMPLE[1] | CERAMIC PARTICLES | UNIT SHAPE | UNIT CROSS-SECTIONAL AREA | UNIT AREA RATIO | SEAL[2] MATERIAL LAYER AREA RATIO |
|---|---|---|---|---|---|
|  |  | cm | cm$^2$ | % | % |
| EXAMPLE 1 | ALUMINA | 3.43 SQUARE | 11.8 | 93.5 | 6.5 |
| EXAMPLE 2 | ALUMINA | 2.00 SQUARE | 4.0 | 89.7 | 10.3 |
| EXAMPLE 3 | ALUMINA | 2.24 SQUARE | 5.0 | 90.2 | 9.8 |
| EXAMPLE 4 | ALUMINA | 7.09 FAN | 39.5 | 96.9 | 3.1 |
| EXAMPLE 5 | ALUMINA | 7.10 SQUARE | 50.0 | 95.5 | 4.5 |
| EXAMPLE 6 | ALUMINA | 7.41 SQUARE | 55.0 | 95.6 | 4.4 |
| EXAMPLE 7 | ALUMINA | MONOLITHIC | 162.0 | 100.0 | 0 |
| EXAMPLE 8 | TITANIA | 3.43 SQUARE | 11.8 | 93.5 | 6.5 |
| EXAMPLE 9 | TITANIA | 2.00 SQUARE | 4.0 | 89.7 | 10.3 |
| EXAMPLE 10 | TITANIA | 2.24 SQUARE | 5.0 | 90.2 | 9.8 |
| EXAMPLE 11 | TITANIA | 7.09 FAN | 39.5 | 96.9 | 3.1 |
| EXAMPLE 12 | TITANIA | 7.10 SQUARE | 50.0 | 95.5 | 4.5 |
| EXAMPLE 13 | TITANIA | 7.41 SQUARE | 55.0 | 95.6 | 4.4 |
| EXAMPLE 14 | TITANIA | MONOLITHIC | 162.0 | 100.0 | 0 |
| EXAMPLE 15 | SILICA | 3.43 SQUARE | 11.8 | 93.5 | 6.5 |
| EXAMPLE 16 | SIUCA | 2.00 SQUARE | 4.0 | 89.7 | 10.3 |
| EXAMPLE 17 | SIUCA | 2.24 SQUARE | 5.0 | 90.2 | 9.8 |
| EXAMPLE 18 | SIUCA | 7.09 FAN | 39.5 | 96.9 | 3.1 |
| EXAMPLE 19 | SIUCA | 7.10 SQUARE | 50.0 | 95.5 | 4.5 |
| EXAMPLE 20 | SIUCA | 7.41 SQUARE | 55.0 | 95.6 | 4.4 |

(continued)

| SAMPLE[1] | CERAMIC PARTICLES | UNIT SHAPE | UNIT CROSS-SECTIONAL AREA | UNIT AREA RATIO | SEAL[2] MATERIAL LAYER AREA RATIO |
|---|---|---|---|---|---|
| | | | cm | cm$^2$ | % | % |
| EXAMPLE 21 | SIUCA | MONOUTHIC | 162.0 | 100.0 | 0 |
| EXAMPLE 22 | ZIRCONIA | 3.43 SQUARE | 11.8 | 93.5 | 6.5 |
| EXAMPLE 23 | ZIRCONIA | 2.00 SQUARE | 4.0 | 89.7 | 10.3 |
| EXAMPLE 24 | ZIRCONIA | 2.24 SQUARE | 5.0 | 90.2 | 9.8 |
| EXAMPLE 25 | ZIRCONIA | 7.09 FAN | 39.5 | 96.9 | 3.1 |
| EXAMPLE 26 | ZIRCONIA | 7.10 SQUARE | 50.0 | 95.5 | 4.5 |
| EXAMPLE 27 | ZIRCONIA | 7.41 SQUARE | 55.0 | 95.6 | 4.4 |
| EXAMPLE 28 | ZIRCONIA | MONOLITHIC | 162.0 | 100.0 | 0 |
| EXAMPLE 29 | CORDIERITE +ALUMINA | MONOUTHIC | 162.0 | 100.0 | 0 |

1) INORGANIC FIBERS = SILICA-ALUMINA FIBERS (10 $\mu$m IN DIAMETER, 100 $\mu$m IN LENGTH, ASPECT RATIO OF 10)
2) INCLUDING AREA OF COATING MATERIAL LAYER

The contents of Examples 2 through 29 to be described below are also shown together in Table 1. In each sample shown in Table 1, the inorganic fibers are silica-alumina fibers (10 $\mu$m in average fiber diameter, 100 $\mu$m in average fiber length, and of an aspect ratio of 10), and the inorganic binder is silica sol (of a solid concentration of 30 wt%). Further, Table 2 shows a collection of data such as numerical values on the inorganic fibers (type, diameter, length, and aspect ratio), unit shape, and unit cross-sectional area of each of Examples 30 through 34 to be described below.

Table 2

| SAMPLE[1] | INORGANIC FIBERS | | | | UNIT SHAPE | UNIT[2] CROSS-SECTIONAL AREA |
|---|---|---|---|---|---|---|
| | TYPE | DIAMETER | LENGTH | ASPECT RATIO | | |
| | | $\mu$m | $\mu$m | | cm | cm$^2$ |
| EXAMPLE 1 | SILICA-ALUMINA FIBERS | 10 | 100 | 10 | 3.43 SQUARE | 11.8 |
| EXAMPLE 30 | SILICA-ALUMINA FIBERS | 5 | 50 | 10 | 3.43 SQUARE | 11.8 |
| EXAMPLE 31 | SILICA-ALUMINA FIBERS | 10 | 20 | 2 | 3.43 SQUARE | 11.8 |
| EXAMPLE 32 | SILICA-ALUMINA FIBERS | 10 | 5000 | 500 | 3.43 SQUARE | 11.8 |
| EXAMPLE 33 | SILICA-ALUMINA FIBERS | 10 | 10000 | 1000 | 3.43 SQUARE | 11.8 |

(continued)

| SAMPLE[1] | INORGANIC FIBERS | | | | UNIT SHAPE | UNIT[2] CROSS-SECTIONAL AREA |
|---|---|---|---|---|---|---|
| | TYPE | DIAMETER | LENGTH | ASPECT RATIO | | |
| | | μm | μm | | cm | cm$^2$ |
| EXAMPLE 34 | SILICA-ALUMINA FIBERS | 10 | 20000 | 2000 | 3.43 SQUARE | 11.8 |

1) CERAMIC PARTICLES = γ-ALUMINA PARTICLES
2) UNIT AREA RATIO = 93.5% SEAL MATERIAL LAYER + COATING MATERIAL LAYER AREA RATIO = 6.5%

In each sample shown in Table 2, the ceramic particles are γ-alumina particles, the inorganic binder is silica sol (of a solid concentration of 30 wt%), the unit area ratio is 93.5%, and the seal material layer area ratio is 6.5%. Further, Table 3 shows a collection of data such as numerical values on the inorganic binder type, unit cross-sectional area, seal material layer thickness, unit area ratio, seal material layer area ratio, and firing temperature of the honeycomb units 11 of the honeycomb unit 10 of each of Examples 44-51.

Table 3

| SAMPLE[1] | INORGANIC BINDER TYPE | UNIT CROSS-SECTIONAL AREA | SEAL MATERIAL LAYER THICKNESS | UNIT AREA RATIO | SEAL[2] MATERIAL LAYER AREA RATIO | FIRING TEMPERATURE |
|---|---|---|---|---|---|---|
| | | cm$^2$ | mm | % | % | °C |
| EXAMPLE 44 | SILICA SOL | 11.8 | 2.0 | 89.3 | 10.7 | 800 |
| EXAMPLE 45 | SILICA SOL | 11.8 | 3.0 | 84.8 | 15.2 | 800 |
| EXAMPLE 46 | SILICA SOL | 5.0 | 2.0 | 83.5 | 16.5 | 800 |
| EXAMPLE 47 | SILICA SOL | 5.0 | 1.5 | 86.8 | 13.2 | 800 |
| EXAMPLE 48 | ALUMINA SOL | 11.8 | 1.0 | 93.5 | 6.5 | 800 |
| EXAMPLE 49 | SEPIOLITE | 11.8 | 1.0 | 93.5 | 6.5 | 800 |
| EXAMPLE 50 | ATTAPULGITE | 11.8 | 1.0 | 93.5 | 6.5 | 800 |
| EXAMPLE 51 | - | 11.8 | 1.0 | 93.5 | 6.5 | 1000 |

1) CERAMIC PARTICLES = γ-ALUMINA PARTICLES INORGANIC FIBERS = SILICA-ALUMINA FIBERS (10 μm IN DIAMETER, 100 μm IN LENGTH, ASPECT RATIO OF 10)
2) INCLUDING AREA OF COATING MATERIAL LAYER

In each sample shown in Table 3, the ceramic particles are γ-alumina particles (2 μm in average particle size), and the inorganic fibers are silica-alumina fibers (10 μm in average fiber diameter, 100 μm in average fiber length, and of an aspect ratio of 10).

[Examples 2 through 7]

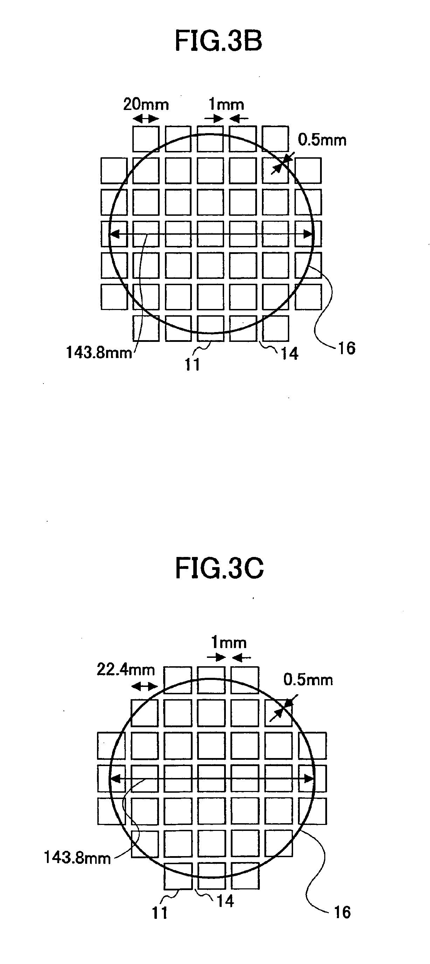

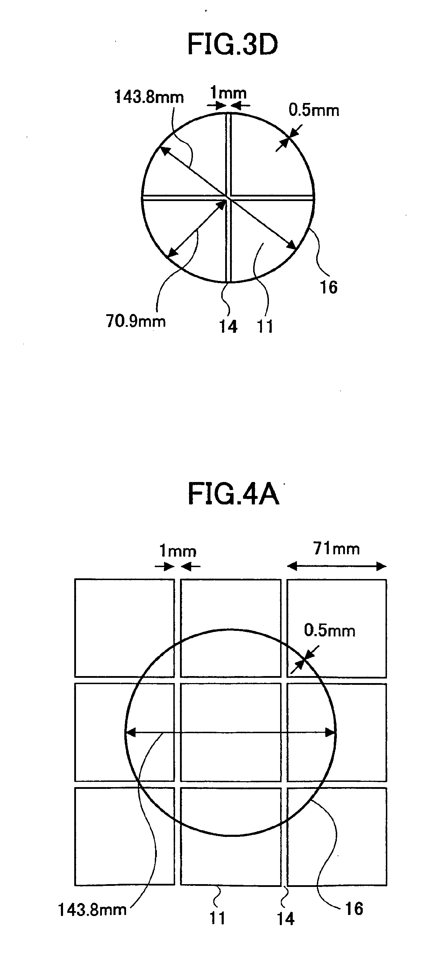

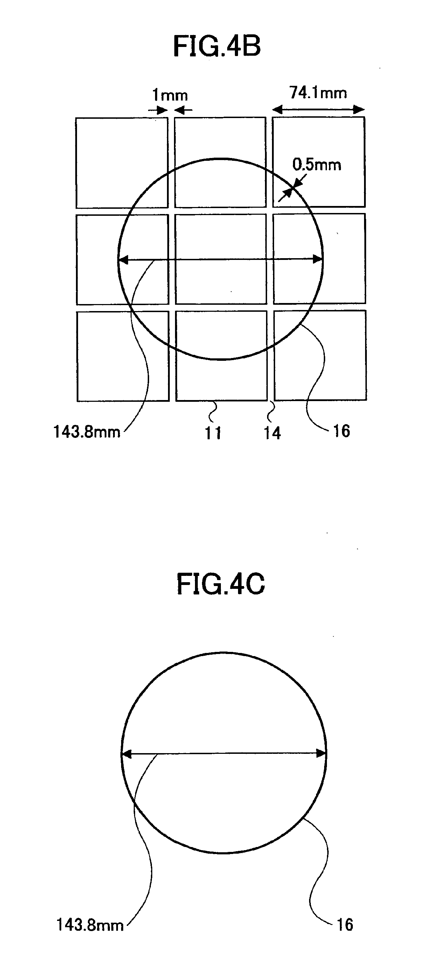

The honeycomb structures 10 were made in the same manner as in Example 1 except that the honeycomb units 11 were made into respective shapes shown in Table 1. The shapes of the joint bodies of Examples 2, 3, and 4 are shown in FIGS. 3B, 3C, and 3D, respectively, and the shapes of the joint bodies of Examples 5, 6, and 7 are shown in FIGS. 4A, 4B, and 4C, respectively. In Example 7, the honeycomb structure 10 was monolithically formed, and accordingly, the joining process and the cutting process were not performed.

[Examples A through G]

The honeycomb structures 10 were made in which the ratio of the thermal conductivity $\kappa 1$ of the honeycomb unit 11 to the thermal conductivity $\kappa 2$ of the seal material layer 14 ($\kappa 1/\kappa 2$) was varied from 0.1 to 7.0 (Examples A through G). The thermal conductivity $\kappa 1$ of the honeycomb unit 11 was controlled by changing the particle size of $\gamma$-alumina particles, the material of inorganic fibers (silica-alumina fibers or alumina fibers), the compounding ratio of additives, etc., of a raw material as shown in Table 4.

Table 4

| HONEYCOMB UNIT COMPONENTS COMPOUNDING RATIO          SAMPLE | CERAMIC PARTICLES | | INORGANIC FIBERS | | ADDITIVES | | | | THERMAL CONDUC -TIVITY $\kappa 1$ W/mK |
|---|---|---|---|---|---|---|---|---|---|
| | $\gamma$-ALUMINA PARTICLES (2$\mu$m IN PARTICLE SIZE) | $\gamma$-ALUMINA PARTICLES (0.5 $\mu$m IN PARTICLE SIZE) | SILICA-FIBERS (10$\mu$m IN FIBER DIAMETER 100$\mu$m IN FIBER LENGTH) | ALUMINA FIBERS (10$\mu$m IN FIBER DIAMETER, 100$\mu$m IN FIBER LENGTH) | SILICA SOL (SOLID CONCENTRATION OF 30%) | ACRYL (20 $\mu$m IN PARTICLE SIZE) | MC | PLASTICIZER, LUBRICANT | |
| EXAMPLES 1.2.3.5.6 | 40 | - | 10 | - | 50 | - | 6 | SMALL QUANTITY | 0.2 |
| EXAMPLES A,D | 28 | 12 | - | 10 | 50 | - | 6 | SMALL QUANTITY | 0.7 |
| EXAMPLES B.E | 40 | - | - | 10 | 50 | - | 6 | SMALL QUANTITY | 0.5 |
| EXAMPLES C.G | 35 | - | 10 | - | 45 | 10 | 6 | SMALL QUANTITY | 0.1 |
| EXAMPLE F | 40 | - | 10 | - | 50 | - | 6 | SMALL QUANTITY | 0.2 |

| SEAL MATERIAL LAYER COMPONENTS COMPOUNDING RATIO | CERAMIC PARTICLES | | INORGANIC FIBERS | | ADDITIVES | | | THERMAL CONDUC -TIVITY $\kappa 2$ W/mK |
|---|---|---|---|---|---|---|---|---|
| SAMPLE | γ-ALUMINA PARTICLES (2μm IN PARTICLE SIZE) | SiC PARTICLES (0.5μm IN PARTICLE SIZE) | SILICA-ALUMINA FIBERS (10μm IN FIBER DIAMETER, 100μm IN FIBER LENGTH) | ALUMINA FIBERS (10μm IN FIBER DIAMETER 100μm IN FIBER LENGTH) | SILICA SOL (SOLID CONCENTRATION OF 30%) | CMC | WATER | |
| EXAMPLES 1,2,3,5,6 | 29 | - | 7 | - | 34 | 5 | 25 | 0.1 |
| EXAMPLES A-C | 29 | - | 7 | - | 34 | 5 | 25 | 0.1 |
| EXAMPLES D-G | - | 29 | - | 7 | 34 | 5 | 25 | 1.0 |

The other conditions for making the honeycomb units 11, such as unit shape, were equal to those of Example 1. Further, in order to change the thermal conductivity κ2 of the seal material layer 14, the seal material paste was controlled by changing the material of ceramic particles (γ-alumina, 2 μm in particle size, or SiC, 0.5 μm in particle size), the material of inorganic fibers (silica-alumina fibers or alumina fibers), the compounding ratio of additives, etc., of a raw material as shown in Table 4. The honeycomb units 11 in which the thermal conductivity κ1 was changed as described above were joined together using this seal material paste, and the honeycomb structures 10 were obtained in the same manner as in Example 1. Table 4 shows the components compounding ratios and the thermal conductivities of the honeycomb units 11 and the seal material layer 14 of each of Examples A through G in comparison with those of Examples 1 through 3, 5, and 6. Table 5 shows the values of the ratio of the thermal conductivity κ1 of the honeycomb unit 11 to the thermal conductivity κ2 of the seal material layer 14 (κ1/κ2) of the obtained honeycomb structures 10.

## Table 5

| SAMPLE | CERAMIC PARTICLES | UNIT CROSS-SECTIONAL AREA | UNIT AREA RATIO | UNIT SPECIFIC SURFACE AREA | STRUCTURE SPECIFIC SURFACE AREA S |
|---|---|---|---|---|---|
| | | cm$^2$ | % | m$^2$/L | m$^2$/L |
| EXAMPLE 1 | ALUMINA | 11.8 | 93.5 | 42000 | 39270 |
| EXAMPLE 2 | ALUMINA | 4.0 | 89.7 | 42000 | 37674 |
| EXAMPLE 3 | ALUMINA | 5.0 | 90.2 | 42000 | 37884 |
| EXAMPLE 5 | ALUMINA | 50.0 | 95.5 | 42000 | 40110 |
| EXAMPLE 6 | ALUMINA | 55.0 | 95.6 | 42000 | 40152 |
| EXAMPLE A | ALUMINA | 11.8 | 93.5 | 44000 | 41140 |
| EXAMPLE B | ALUMINA | 11.8 | 93.5 | 42000 | 39270 |
| EXAMPLE C | ALUMINA | 11.8 | 93.5 | 39000 | 36465 |
| EXAMPLE D | ALUMINA | 11.8 | 93.5 | 44000 | 41140 |
| EXAMPLE E | ALUMINA | 11.8 | 93.5 | 42000 | 39270 |
| EXAMPLE F | ALUMINA | 11.8 | 93.5 | 42000 | 39270 |
| EXAMPLE G | ALUMINA | 11.8 | 93.5 | 39000 | 36465 |

| SAMPLE | UNIT THERMAL CONDUCTIVITY κ1 | SEAL MATERIAL LAYER THERMAL CONDUCTIVITY κ2 | κ1/κ2 | REDUCTION RATE G OF THERMAL SHOCK AND VIBRATION TESTS | PRESSURE LOSS |
|---|---|---|---|---|---|
| | W/mK | W/mK | | Wt% | kPa |
| EXAMPLE 1 | 0.2 | 0.1 | 2.0 | 0 | 2.4 |
| EXAMPLE 2 | 0.2 | 0.1 | 2.0 | 0 | 2.8 |
| EXAMPLE 3 | 0.2 | 0.1 | 2.0 | 0 | 2.5 |
| EXAMPLE 5 | 0.2 | 0.1 | 2.0 | 3 | 2.3 |
| EXAMPLE 6 | 0.2 | 0.1 | 2.0 | 52 | 2.3 |
| EXAMPLE A | 0.7 | 0.1 | 7.0 | 36 | 2.4 |
| EXAMPLE B | 0.5 | 0.1 | 5.0 | 7 | 2.4 |
| EXAMPLE C | 0.1 | 0.1 | 1.0 | 0 | 2.4 |
| EXAMPLE D | 0.7 | 1.0 | 0.7 | 0 | 2.4 |
| EXAMPLE E | 0.5 | 1.0 | 0.5 | 3 | 2.4 |
| EXAMPLE F | 0.2 | 1.0 | 0.2 | 8 | 2.4 |
| EXAMPLE G | 0.1 | 1.0 | 0.1 | 32 | 2.4 |

[Examples 8 through 14]

The honeycomb units 11 were made in the same manner as in Example 1 except that the honeycomb units 11 were made into respective shapes shown in Table 1 using titania particles (2 $\mu$m in average particle size) instead of ceramic particles. Then, the honeycomb structures 10 were made in the same manner as in Example 1 except that the ceramic particles of the seal material layer 14 and the coating material layer 16 were replaced with titania particles (2 $\mu$m in average particle size). The joint bodies of Examples 8 through 11 are equal in shape to those of FIGS. 3A through 3D, respectively. The joint bodies of Examples 12 through 14 are equal in shape to those of FIGS. 4A through 4C, respectively. In Example 14, the honeycomb unit 10 was monolithically formed.

[Examples 15 through 21]

The honeycomb units 11 were made in the same manner as in Example 1 except that the honeycomb units 11 were made into respective shapes shown in Table 1 using silica particles (2 $\mu$m in average particle size) instead of ceramic particles. Then, the honeycomb structures 10 were made in the same manner as in Example 1 except that the ceramic particles of the seal material layer 14 and the coating material layer 16 were replaced with silica particles (2 $\mu$m in average particle size). The joint bodies of Examples 15 through 18 are equal in shape to those of FIGS. 3A through 3D, respectively. The joint bodies of Examples 19 through 21 are equal in shape to those of FIGS. 4A through 4C, respectively. In Example 21, the honeycomb unit 10 was monolithically formed.

[Examples 22 through 28]

The honeycomb units 11 were made in the same manner as in Example 1 except that the honeycomb units 11 were made into respective shapes shown in Table 1 using zirconia particles (2 $\mu$m in average particle size) instead of ceramic particles. Then, the honeycomb structures 10 were made in the same manner as in Example 1 except that the ceramic particles of the seal material layer 14 and the coating material layer 16 were replaced with zirconia particles (2 $\mu$m in average particle size). The joint bodies of Examples 22 through 25 are equal in shape to those of FIGS. 3A through 3D, respectively. The joint bodies of Examples 26 through 28 are equal in shape to those of FIGS. 4A through 4C, respectively. In Example 28, the honeycomb unit 10 was monolithically formed.

[Example 29]

A commercially available cylindrical (143. 8 mm in diameter × 150 mm in length) cordierite honeycomb structure in which alumina serving as a catalyst carrier layer is formed inside through holes was employed as Example 29. The cell shape was hexagonal, the cell density was 62/cm$^2$ (400 cpsi), and the wall thickness was 0.18 mm. The shape of the honeycomb structure viewed from its front surface is equal to that of FIG. 4C.

[Examples 30 through 34]

The honeycomb units 11 were made in the same manner as in Example 1 except that silica-alumina fibers of respective shapes shown in Table 2 were used as inorganic fibers. Then, the honeycomb structures 10 were made in the same manner as in Example 1 except that the same silica-alumina fibers as in the honeycomb units 11 were used for the seal material layer 14 and the coating material layer 16. The joint bodies of Examples 30 through 34 are equal in shape to that of FIG. 3A.

[Examples 44 through 47]

The honeycomb structures 10 were made in the same manner as in Example 1 except that the cross-sectional areas of the honeycomb units 11 and the thickness of the seal material layer 14 joining the honeycomb units 11 were changed as shown in Table 3. The joint bodies of Examples 44 and 45 are equal in shape to that of FIG. 3A. The joint bodies of Examples 46 and 47 are equal in shape to that of FIG. 3C.

[Example 48]

The honeycomb structure 10 was made in the same manner as in Example 1 except that alumina sol (of a solid concentration of 30 wt%) was employed as an inorganic binder as shown in Table 3.

[Examples 49 and 50]

The honeycomb structures 10 were made in the same manner as in Example 1 except that the honeycomb units 11 were made using sepiolite in Example 49 and attapulgite in Example 50 as inorganic binders. Specifically, 40 wt% of γ-alumina particles (2 μm in average particle size), 10 wt% of silica-alumina fibers (10 μm in average fiber diameter, 100 μm in average fiber length, and of an aspect ratio of 10), 15 wt% of an inorganic binder, and 35 wt% of water were mixed, and an organic binder, a plasticizer, and lubricant were added to the obtained mixture as in Example 1. Then, molding and firing were performed, so that the honeycomb units 11 were obtained. Next, the honeycomb units 11 were joined with the same seal material paste as that of Example 1. Then, as in Example 1, the obtained joint body was cut and the coating material layer 16 was formed thereon, so that the cylindrical (143. 8 mm in diameter × 150 mm in length) honeycomb structure 10 was obtained.

[Example 51]

The honeycomb structure 10 was made in the same manner as in Example 1 except that the honeycomb units 11 were made without putting in an inorganic binder. Specifically, 50 wt% of γ-alumina particles (2 μm in average particle size), 15 wt% of silica-alumina fibers (10 μm in average fiber diameter, 100 μm in average fiber length, and of an aspect ratio of 10), and 35 wt% of water were mixed, and as in Example 1, an organic binder, a plasticizer, and lubricant were added to the obtained mixture, and molding was performed. The obtained molded bodies were subjected to firing at 1000°C, so that the honeycomb units 11 were obtained. Next, the honeycomb units 11 were joined with the same seal material paste as that of Example 1. Then, as in Example 1, the obtained joint body was cut and the coating material layer 16 was formed thereon, so that the cylindrical (143. 8 mm in diameter × 150 mm in length) honeycomb structure 10 was obtained.

[Specific Surface Area Measurement]

The specific surface areas of the honeycomb units 11 of Examples 1 through 51 and Examples A through G were measured. First, the volumes of the honeycomb units 11 and the seal material were actually measured, and the ratio of the unit material to the volume of the honeycomb structure 10 (= A [vol%]) was calculated. Next, the BET specific surface area per unit weight of the honeycomb units 11 (= B [m$^2$/g]) was measured. The BET specific surface area was measured by the single-point method based on JIS-R-1626 (1996) set by Japanese Industrial Standards using a BET measuring apparatus (Micromeritics FlowSorb II-2300 manufactured by Shimadzu Corporation). In the measurement, a cylindrically cut-out small piece (15 mm in diameter × 15 mm in height) was employed as a sample. The apparent density of the honeycomb units 11 (= C [g/L]) was calculated from the weight and the volume of the outer shape of the honeycomb units 11, and the specific surface area of the honeycomb structure 10 (= S [m$^2$/L]) was given by the following Eq. (1). Here, the specific surface area of the honeycomb structure 10 refers to the specific surface area per apparent volume of the honeycomb structure 10.

$$S \ (m^2/L) \ = \ (A/100) \ \times \ B \ \times \ C. \qquad \cdots(1)$$

[Repeated Thermal Shock and Vibration Tests]

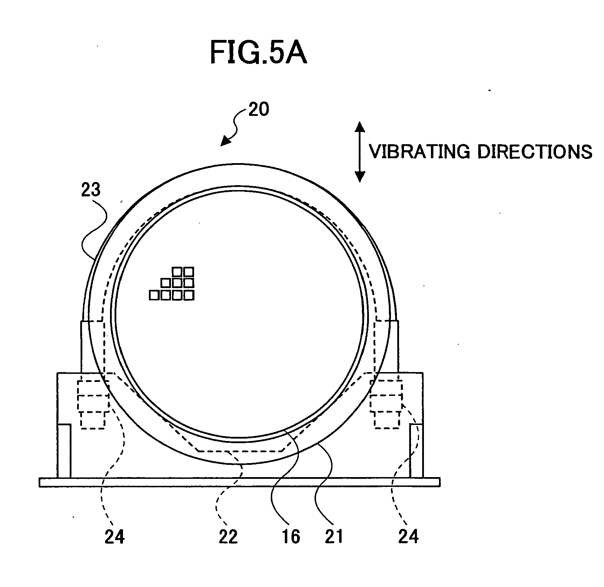

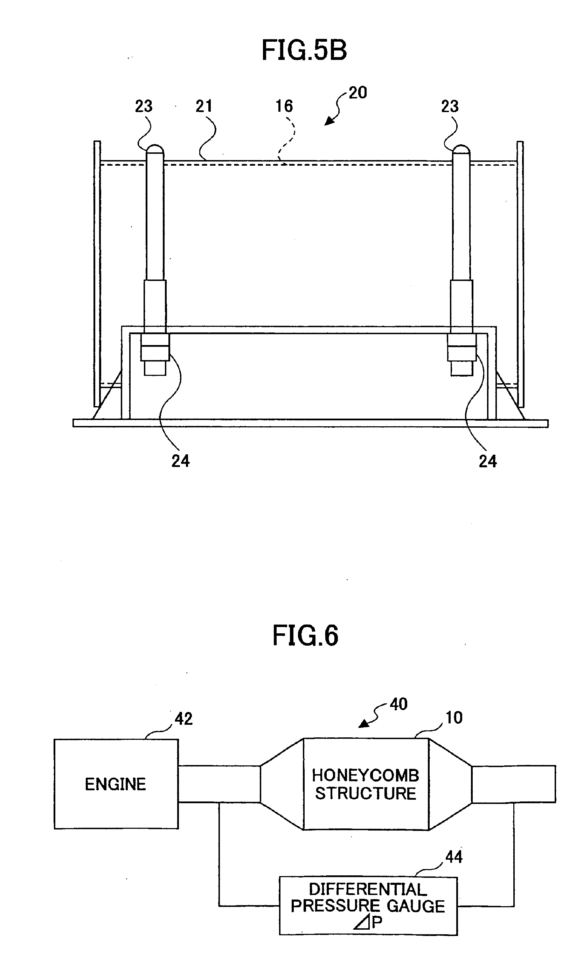

The honeycomb structures 10 of Examples 1 through 51 and Examples A through G were subjected to repeated thermal shock and vibration tests. In the thermal shock test, each honeycomb structure 10 in a metal casing 21 (FIGS. 5A and 5B) with an alumina mat (MAFTEC, manufactured by Mitsubishi Chemical Functional Products, Inc., 46.5 cm × 15 cm, 6 mm in thickness), which is a heat insulator formed of alumina fibers, being around the exterior cylindrical surface of the honeycomb structure 10, was put in a furnace set at 600°C. After being heated for 10 minutes, the honeycomb structure 10 in the metal casing 21 was extracted from the furnace and cooled rapidly to room temperature. Next, the vibration test was conducted on the honeycomb structure 10 in the metal casing 21. FIG. 5A is a front view of a vibration apparatus 20 used for the vibration test. FIG. 5B is a side view of the vibration apparatus 20. The metal casing 21 containing the honeycomb structure 10 was placed on a seat 22, and the metal casing 21 was fixed by fastening substantially U-shaped fixtures 23 with screws 24. As a result, the metal casing 21 was capable of vibrating with the seat 22 and the fixtures 23 as a unit. The vibration test was conducted under the conditions of a frequency of 160 Hz, an acceleration of 30 G, an amplitude of 0.58 mm, a retention time of 10 hours, room temperature, and the vibrating directions along the Z-axis (upward and downward). These thermal shock test and vibration test were repeated alternately ten times each, and the weight of the honeycomb structure 10 before the tests (= T0) and the weight of the honeycomb structure after the tests (= Ti) were measured, so that the rate of weight reduction (= G) was determined using the following Eq. (2).

$$G \ (\mathrm{wt\%}) \ = \ 100 \ \times \ (T0 - Ti)/T0. \qquad \cdots (2)$$

[Pressure Loss Measurement]

The pressure loss of each of the honeycomb structures 10 of Examples 1 through 51 and Examples A through G was measured. FIG. 6 is a schematic diagram showing a pressure loss measuring apparatus 40. The measurement was performed as follows. The honeycomb structure 10 having an alumina mat wrapped therearound in a metal casing was placed in the exhaust pipe of a 2L common rail diesel engine 42, and a differential pressure gauge 44 was attached across the honeycomb structure 10. The measurement conditions were an engine speed of 1500 rpm and a torque of 50 Nm, and the differential pressure at 5 minutes after the start of operation was measured.

[Experimental Results]

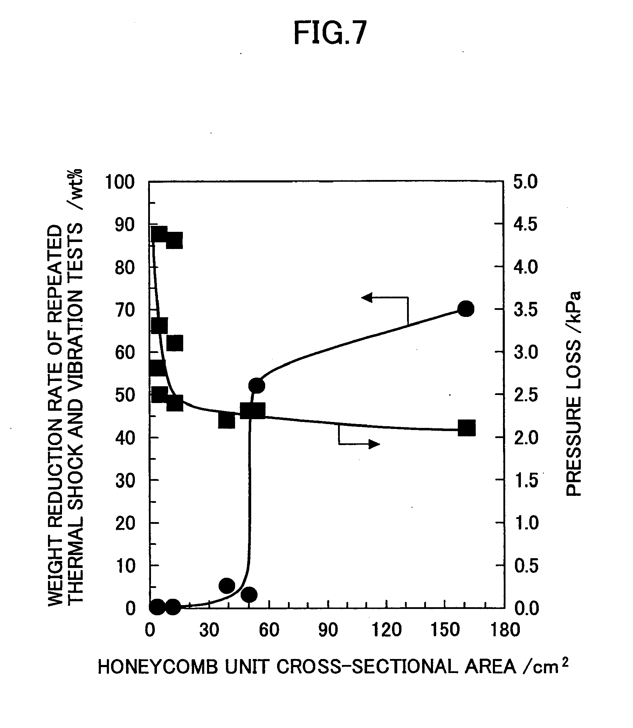

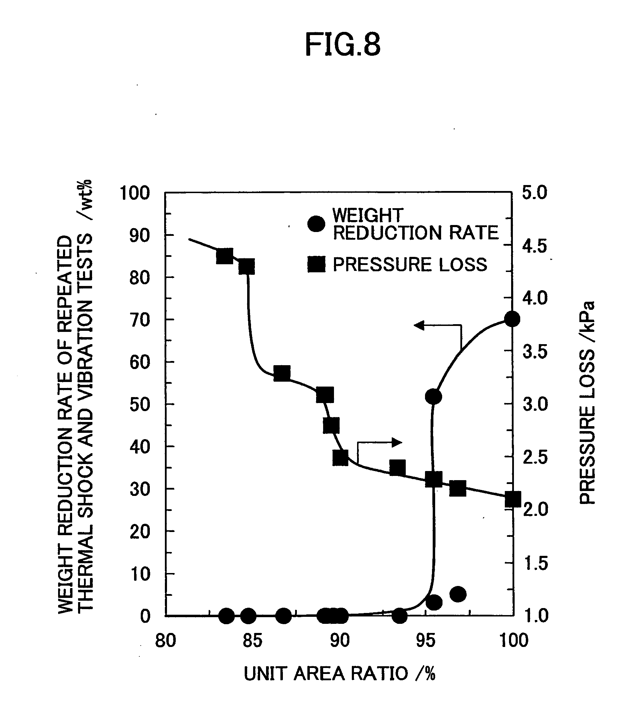

Table 6 shows a collection of data such as numerical values on the ceramic particle component(s), unit cross-sectional area, unit area ratio, the specific surface area of the honeycomb unit 11, the specific surface area S of the honeycomb structure 10, the weight reduction rate G of the repeated thermal shock and vibration tests, and pressure loss of each of Examples 1 through 29 and 44 through 47. FIG. 7 is a graph showing the cross-sectional area of the honeycomb unit 11 plotted as the horizontal axis, and the weight reduction rate G of the repeated thermal shock and vibration tests and the pressure loss plotted as the vertical axes. FIG. 8 is a graph showing the unit area ratio plotted as the horizontal axis, and the weight reduction rate G of the repeated thermal shock and vibration tests and the pressure loss plotted as the vertical axes.

Table 6

| SAMPLE※ | CERAMIC PARTICLES | UNIT CROSS-SECTIONAL AREA | UNIT AREA RATIO | UNIT SPECIFIC SURFACE AREA | STRUCTURE SPECIFIC SURFACE AREA S | REDUCTION RATE G OF THERMAL SHOCK AND VIBRATION TESTS | PRESSURE LOSS |
|---|---|---|---|---|---|---|---|
| | | cm$^2$ | % | m$^2$/L | m$^2$/L | wt% | kPa |
| EXAMPLE 1 | ALUMINA | 11.8 | 93.5 | 42000 | 39270 | 0 | 2.4 |
| EXAMPLE 2 | ALUMINA | 4.0 | 89.7 | 42000 | 37674 | 0 | 2.8 |
| EXAMPLE 3 | ALUMINA | 5.0 | 90.2 | 42000 | 37884 | 0 | 2.5 |
| EXAMPLE 4 | ALUMINA | 39.5 | 96.9 | 42000 | 40698 | 5 | 2.2 |
| EXAMPLE 5 | ALUMINA | 50.0 | 95.5 | 42000 | 40110 | 3 | 2.3 |
| EXAMPLE 6 | ALUMINA | 55.0 | 95.6 | 42000 | 40152 | 52 | 2.3 |
| EXAMPLE 7 | ALUMINA | 162.0 | 100.0 | 42000 | 42000 | 70 | 2.1 |
| EXAMPLE 8 | TITANIA | 11.8 | 93.5 | 38000 | 35530 | 0 | 2.4 |
| EXAMPLE 9 | TITANIA | 4.0 | 89.7 | 38000 | 34086 | 0 | 2.8 |
| EXAMPLE 10 | TITANIA | 5.0 | 90.2 | 38000 | 34276 | 0 | 2.5 |
| EXAMPLE 11 | TITANIA | 39.5 | 96.9 | 38000 | 36822 | 7 | 2.2 |
| EXAMPLE 12 | TITANIA | 50.0 | 95.5 | 38000 | 36290 | 5 | 2.3 |
| EXAMPLE 13 | TITANIA | 55.0 | 95.6 | 38000 | 36328 | 63 | 2.3 |
| EXAMPLE 14 | TITANIA | 162.0 | 100.0 | 38000 | 38000 | 90 | 2.1 |
| EXAMPLE 15 | SIUCA | 11.8 | 93.5 | 41000 | 38335 | 0 | 2.4 |
| EXAMPLE 16 | SIUCA | 4.0 | 89.7 | 41000 | 36777 | 0 | 2.8 |
| EXAMPLE 17 | SILICA | 5.0 | 90.2 | 41000 | 36982 | 0 | 2.5 |
| EXAMPLE 18 | SILICA | 39.5 | 96.9 | 41000 | 39729 | 4 | 2.2 |
| EXAMPLE 19 | SILICA | 50.0 | 95.5 | 41000 | 39155 | 3 | 2.3 |
| EXAMPLE 20 | SILICA | 55.0 | 95.6 | 41000 | 39196 | 42 | 2.3 |
| EXAMPLE 21 | SILICA | 162.0 | 100.0 | 41000 | 41000 | 65 | 2.1 |
| EXAMPLE 22 | ZIRCONIA | 11.8 | 93.5 | 41500 | 38803 | 0 | 2.4 |
| EXAMPLE 23 | ZIRCONIA | 4.0 | 89.7 | 41500 | 37226 | 0 | 2.8 |
| EXAMPLE 24 | ZIRCONIA | 5.0 | 90.2 | 41500 | 37433 | 0 | 2.5 |
| EXAMPLE 25 | ZIRCONIA | 39.5 | 96.9 | 41500 | 40214 | 5 | 2.2 |

(continued)

| SAMPLE※ | CERAMIC PARTICLES | UNIT CROSS-SECTIONAL AREA | UNIT AREA RATIO | UNIT SPECIFIC SURFACE AREA | STRUCTURE SPECIFIC SURFACE AREA S | REDUCTION RATE G OF THERMAL SHOCK AND VIBRATION TESTS | PRESSURE LOSS |
|---|---|---|---|---|---|---|---|
| | | cm$^2$ | % | m$^2$/L | m$^2$/L | wt% | kPa |
| EXAMPLE 26 | ZIRCONIA | 50.0 | 95.5 | 41500 | 39633 | 3 | 2.3 |
| EXAMPLE 27 | ZIRCONIA | 55.0 | 95.6 | 41500 | 39674 | 57 | 2.3 |
| EXAMPLE 28 | ZIRCONIA | 162.0 | 100.0 | 41500 | 41500 | 83 | 2.1 |
| EXAMPLE 29 | CORDIERITE +ALUMINA | 162.0 | 100.0 | 25000 | 25000 | 0 | 2.9 |
| EXAMPLE 44 | ALUMINA | 11.8 | 89.3 | 42000 | 37506 | 0 | 3.1 |
| EXAMPLE 45 | ALUMINA | 11.8 | 84.8 | 42000 | 35616 | 0 | 4.3 |
| EXAMPLE 46 | ALUMINA | 5.0 | 83.5 | 42000 | 35070 | 0 | 4.4 |
| EXAMPLE 47 | ALUMINA | 5.0 | 86.8 | 42000 | 36456 | 0 | 3.3 |

※ INORGANIC FIBERS = SILICA-ALUMINA FIBERS (10 $\mu$m IN DIAMETER. 100 $\mu$m IN LENGTH, ASPECT RATIO OF 10)

The measurement results of Examples 1 through 29 and 44 through 47 shown in Table 6 and FIG. 7 clearly show that with ceramic particles, inorganic fibers, and an inorganic binder being employed as principal components and the cross-sectional area of the honeycomb unit 11 being within 5-50 cm$^2$, the honeycomb structure 10 has a large specific surface area per unit volume and sufficient strength against thermal shock and vibration. Further, it has also been found that as shown in FIG. 8, with ceramic particles, inorganic fibers, and an inorganic binder being employed as principal components, the cross-sectional area of the honeycomb unit 11 being less than or equal to 50 cm$^2$, and the unit area ratio being greater than or equal to 85%, the honeycomb structure 10 has a large specific surface area per unit volume, sufficient strength against thermal shock and vibration, and reduced pressure loss. In particular, when the unit area ratio is greater than or equal to 90%, the pressure loss decreases conspicuously.

Table 5 shows a collection of data such as numerical values on the unit cross-sectional area, unit area ratio, the specific surface area of the honeycomb unit 11, the specific surface area S of the honeycomb structure 10, the ratio of the thermal conductivity $\kappa 1$ of the honeycomb unit 11 to the thermal conductivity $\kappa 2$ of the seal material layer 14 ($\kappa 1/\kappa 2$), the weight reduction rate G of the repeated thermal shock and vibration tests, and pressure loss of each of Examples A through G. Table 5 also shows the results of Examples 1 through 3, 5, and 6 for comparison. These measurement results show that it is possible to obtain sufficient strength against thermal shock and vibration by causing the cross-sectional area of the honeycomb unit 11 to be within the range of 5-50 cm$^2$ and causing $\kappa 1/\kappa 2$ to be within the range of 0.2-5.

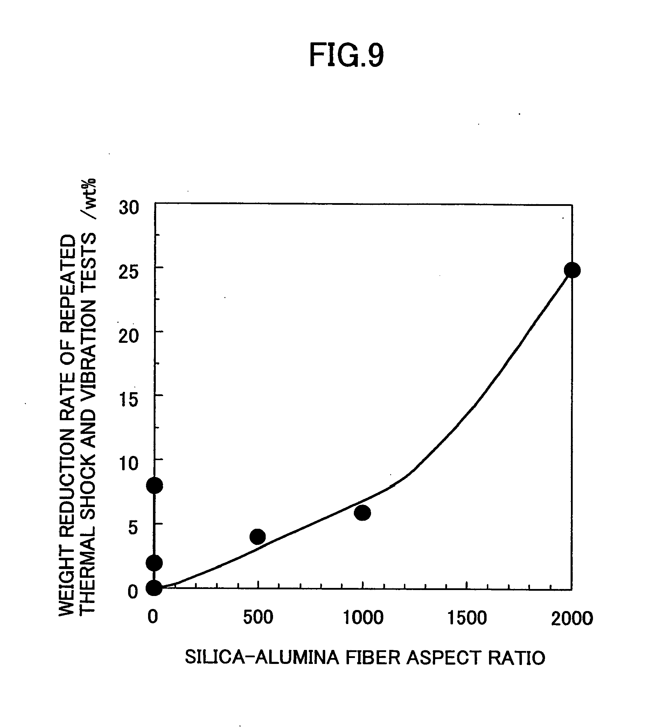

Next, Table 7 shows a collection of numerical data on the diameter, length, and aspect ratio of the silica-alumina fibers; the specific surface area of the honeycomb unit 11; the specific surface area S of the honeycomb structure 10; the weight reduction rate G of the repeated thermal shock and vibration tests; and the pressure loss of Examples 1 and 30 through 34 in which the aspect ratio of inorganic fibers was varied. FIG. 9 is a graph showing the aspect ratio of the silica-alumina fibers plotted as the horizontal axis, and the weight reduction rate G of the repeated thermal shock and vibration tests plotted as the vertical axis with respect to Examples 1 and 30 through 34.

Table 7

| SAMPLE※ | SILICA-ALUMINA FIBERS | | | UNIT SPECIFIC SURFACE AREA | STRUCTURE SPECIFIC SURFACE AREA S | REDUCTION RATE G OF THERMAL SHOCK AND VIBRATION TESTS | PRESSURE LOSS |
|---|---|---|---|---|---|---|---|
| | DIAMETER | LENGTH | ASPECT RATIO | | | | |
| | $\mu$m | $\mu$m | | $m^2/L$ | $m^2/L$ | wt% | kPa |
| EXAMPLE 1 | 10 | 100 | 10 | 42000 | 39270 | 0 | 2.4 |
| EXAMPLE 30 | 5 | 50 | 10 | 42000 | 39270 | 2 | 2.4 |
| EXAMPLE 31 | 10 | 20 | 2 | 42000 | 39270 | 8 | 2.4 |
| EXAMPLE 32 | 10 | 5000 | 500 | 42000 | 39270 | 4 | 2.4 |
| EXAMPLE 33 | 10 | 10000 | 1000 | 42000 | 39270 | 6 | 2.4 |
| EXAMPLE 34 | 10 | 20000 | 2000 | 42000 | 39270 | 25 | 2.4 |

※ CERAMIC PARTICLES = $\gamma$-ALUMINA PARTICLES

These results show that sufficient strength against thermal shock and vibration can be obtained when the aspect ratio of inorganic fibers falls within the range of 2-1000.

Next, Table 8 shows a collection of data such as numerical values on the inorganic binder type, the firing temperature of the honeycomb unit 11, unit area ratio, the specific surface area of the honeycomb unit 11, the specific surface area S of the honeycomb structure 10, the weight reduction rate G of the repeated thermal shock and vibration tests, and pressure loss of each of Examples 48 through 50, in which the honeycomb units 11 were made with different types of inorganic binders, and Example 51, in which the honeycomb units 11 were made without putting in an inorganic binder.

Table 8

| SAMPLE※ | INORGANIC BINDER | UNIT AREA RATIO | FIRING TEMPERATURE | UNIT SPECIFIC SURFACE AREA | STRUCTURE SPECIFIC SURFACE AREA S | REDUCTION RATE G OF THERMAL SHOCK AND VIBRATION TESTS | PRESSURE LOSS |
|---|---|---|---|---|---|---|---|
| | TYPE | % | °C | m²/L | m²/L | wt% | kPa |
| EXAMPLE 48 | ALUMINA SOL | 93.5 | 800 | 42000 | 39270 | 0 | 2.4 |
| EXAMPLE 49 | SEPIOLITE | 93.5 | 800 | 42000 | 39270 | 0 | 2.4 |
| EXAMPLE 50 | ATTAPULGITE | 93.5 | 800 | 42000 | 39270 | 0 | 2.4 |
| EXAMPLE 51 | — | 93.5 | 1000 | 42000 | 37400 | 20 | 2.4 |

※ ) CERAMIC PARTICLES = γ-ALUMINA PARTICLES INORGANIC FIBERS = SILICA-ALUMINA FIBERS (10 μm IN DIAMETER. 100 μ m IN LENGTH. ASPECT RATIO OF 10) UNIT SHAPE = 3.43 cm square

These results show that when no inorganic binder is put in, sufficient strength can be obtained by firing at relatively high temperatures. Further, these results show that sufficient strength can also be obtained by firing at relatively low temperatures when an inorganic binder is put in. These results also show that even when the inorganic binder is alumina sol or a clay-based binder, the honeycomb structure 10 can have a great specific surface area per unit volume and sufficient strength against thermal shock and vibration.

According to one embodiment of the present invention, in a honeycomb structure having multiple honeycomb units united through a seal material layer, the honeycomb units each having multiple through holes arranged side by side in a longitudinal direction and separated from each other by the wall surfaces of the through holes, the honeycomb units include at least ceramic particles and inorganic fibers and/or whiskers, at least one of the honeycomb units has a cross section perpendicular to a longitudinal direction thereof, the cross section having an area greater than or equal to 5 cm$^2$ and less than or equal to 50 cm$^2$, and for each of the honeycomb units, the ratio of the thermal conductivity of the honeycomb unit to the thermal conductivity of the seal material layer falls within the range of 0.2-5.

Thus, a honeycomb structure capable of achieving high dispersion of a catalyst component and increasing strength against thermal shock and vibration can be provided.

Additionally, in the honeycomb structure, the ratio of the total of the areas of the cross sections of the honeycomb units perpendicular to the longitudinal direction thereof to the area of a cross section of the honeycomb structure perpendicular to a longitudinal direction thereof is greater than or equal to 85%. This makes it possible to cause a relative increase in the surface area capable of carrying a catalyst, and a relative reduction in pressure loss.

Additionally, the honeycomb structure may include a coating material layer on the exterior axial surface of the joint body of the honeycomb units. This makes it possible to increase the strength of the honeycomb structure by protecting its exterior surface.

Additionally, in the honeycomb structure, the ceramic particles may include at least one selected from alumina, silica, zirconia, titania, ceria, mullite, and zeolite. This makes it possible to increase the specific surface area of the honeycomb units.

Additionally, in the honeycomb structure the inorganic fibers and/or the whiskers may include at least one selected from alumina, silica, silicon carbide, silica alumina, glass, potassium titanate, and aluminum borate. This makes it possible to increase the strength of the honeycomb units.

Additionally, in the honeycomb structure, the honeycomb units may be manufactured using a mixture including the ceramic particles, the inorganic fibers and/or the whiskers, and an inorganic binder; and the inorganic binder may include at least one selected from alumina sol, silica sol, titania sol, water glass, sepiolite, and attapulgite. This makes it possible to obtain sufficient strength even if the honeycomb units are subjected to firing at low temperatures.

Additionally, a catalyst component may be carried on the honeycomb structure. As a result, a honeycomb catalyst having a catalyst component highly dispersed can be obtained.

Additionally, in the honeycomb structure, the catalyst component may include at least one component selected from noble metal, alkali metal, alkaline earth metal, and oxide. This makes it possible to increase conversion performance.

Additionally, the honeycomb structure may be used for converting the exhaust gas of a vehicle.

The present invention may be applied to a catalyst carrier for converting (purifying) the exhaust gas of vehicles and an adsorbent adsorbing a gas component or a liquid component.

The present invention is not limited to the specifically disclosed embodiment, and variations and modifications may be made without departing from the scope of the present invention.

**Claims**

1. A honeycomb structure (10) having a plurality of honeycomb units (11) united through a seal material layer (14), the honeycomb units each having a plurality of through holes (12) arranged side by side in a longitudinal direction and separated from each other by wall surfaces of the through holes (12), **characterized in that**:

    the honeycomb units (11) comprise at least:

        ceramic particles; and
        at least one of inorganic fibers and whiskers;

    at least one of the honeycomb units (11) has a cross section perpendicular to a longitudinal direction thereof, the cross section having an area greater than or equal to 5 cm$^2$ and less than or equal to 50 cm$^2$; and
    for each of the honeycomb units (11), a ratio of a thermal conductivity of the honeycomb unit (11) to a thermal conductivity of the seal material layer (14) falls within a range of 0.2-5.

2. The honeycomb structure (10) as claimed in claim 1, **characterized in that** a ratio of a total of the areas of the cross sections of the honeycomb units (11) perpendicular to the longitudinal direction thereof to an area of a cross section of the honeycomb structure (10) perpendicular to a longitudinal direction thereof is greater than or equal to 85%.

3. The honeycomb structure (10) as claimed in claim 1 or 2, **characterized by**:

a coating material layer (16) on an exterior axial surface of a joint body into which the honeycomb units (11) are united.

4. The honeycomb structure (10) as claimed in any of claims 1 to 3, **characterized in that** the ceramic particles comprise at least one selected from the group consisting of alumina, silica, zirconia, titania, ceria, mullite, and zeolite.

5. The honeycomb structure (10) as claimed in any of claims 1 to 4, **characterized in that** the at least one of the inorganic fibers and the whiskers comprise at least one selected from the group consisting of alumina, silica, silicon carbide, silica alumina, glass, potassium titanate, and aluminum borate.

6. The honeycomb structure (10) as claimed in any of claims 1 to 5, **characterized in that**:

the honeycomb units (11) are manufactured using a mixture including the ceramic particles, the at least one of the inorganic fibers and the whiskers, and an inorganic binder; and
the inorganic binder comprises at least one selected from the group consisting of alumina sol, silica sol, titania sol, water glass, sepiolite, and attapulgite.

7. The honeycomb structure (10) as claimed in any of claims 1 to 6, **characterized in that** a catalyst component is carried on the honeycomb structure (10).

8. The honeycomb structure (10) as claimed in claim 7, **characterized in that** the catalyst component comprises at least one component selected from the group of noble metal, alkali metal, alkaline earth metal, and oxide.

9. The honeycomb structure (10) as claimed in any of claims 1 to 8, **characterized in that** the honeycomb structure (10) is used for conversion of exhaust gas of a vehicle.

# FIG.1A

# FIG.1B

# FIG.2

# FIG.3A

# FIG.3B

20mm   1mm

0.5mm

143.8mm   11   14   16

# FIG.3C

1mm

22.4mm   0.5mm

143.8mm   11   14   16

# FIG.3D

143.8mm  1mm  0.5mm

70.9mm  14  11  16

# FIG.4A

1mm  71mm

0.5mm

143.8mm  11  14  16

# FIG.4B

1mm

74.1mm

0.5mm

143.8mm

11      14      16

# FIG.4C

143.8mm

16

# FIG.5A

# FIG.5B

# FIG.6

EP 1 736 219 A1

# FIG.7

# FIG.8

# FIG.9

European Patent
Office

**EUROPEAN SEARCH REPORT**

Application Number

EP 05 02 8674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/083149 A (NGK INSULATORS, LTD; MASUKAWA, NAOSHI; ICHIKAWA, SHUICHI) 30 September 2004 (2004-09-30) * the whole document * | 1-9 | B01D39/20 B01D46/24 B01J35/04 F01N3/28 |
| Y | EP 1 338 326 A (NIPPON SHOKUBAI CO., LTD) 27 August 2003 (2003-08-27) * paragraphs [0108] - [0116] * | 1,3-9 | |
| Y | PATENT ABSTRACTS OF JAPAN vol. 017, no. 659 (C-1137), 7 December 1993 (1993-12-07) & JP 05 213681 A (KAWATA MFG CO LTD; others: 01), 24 August 1993 (1993-08-24) * abstract * | 1,3-9 | |
| Y | EP 1 247 556 A (NGK INSULATORS, LTD) 9 October 2002 (2002-10-09) * paragraphs [0043], [0044]; claim 10 * | 2 | |
| Y | EP 1 142 619 A (IBIDEN CO., LTD) 10 October 2001 (2001-10-10) * paragraphs [0023], [0102], [0103] * | 3 | TECHNICAL FIELDS SEARCHED (IPC) |
| A | * paragraphs [0067], [0079]; claims 2,3 * | 1 | B01D B01J F01N |
| A | US 2004/128991 A1 (SAKAMOTO HIROFUMI) 8 July 2004 (2004-07-08) * paragraph [0036] * | 1 | |

The present search report has been drawn up for all claims

| Place of search | Date of completion of the search | Examiner |
|---|---|---|
| Munich | 29 March 2006 | Hoffmann, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 736 219 A1

## ANNEX TO THE EUROPEAN SEARCH REPORT
## ON EUROPEAN PATENT APPLICATION NO.

EP 05 02 8674

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2006

| Patent document cited in search report | | Publication date | Patent family member(s) | | | Publication date |
|---|---|---|---|---|---|---|
| WO 2004083149 | A | 30-09-2004 | EP | 1612197 | A1 | 04-01-2006 |
| | | | JP | 2004283669 | A | 14-10-2004 |
| EP 1338326 | A | 27-08-2003 | JP | 2003245547 | A | 02-09-2003 |
| | | | US | 2003170160 | A1 | 11-09-2003 |
| JP 05213681 | A | 24-08-1993 | NONE | | | |
| EP 1247556 | A | 09-10-2002 | AU | 2548201 | A | 24-07-2001 |
| | | | DE | 60109735 | D1 | 04-05-2005 |
| | | | DE | 60109735 | T2 | 23-02-2006 |
| | | | WO | 0151174 | A1 | 19-07-2001 |
| | | | JP | 2001190917 | A | 17-07-2001 |
| | | | US | 2003000188 | A1 | 02-01-2003 |
| | | | ZA | 200205517 | A | 18-08-2003 |
| EP 1142619 | A | 10-10-2001 | WO | 0123069 | A1 | 05-04-2001 |
| | | | US | 6669751 | B1 | 30-12-2003 |
| US 2004128991 | A1 | 08-07-2004 | AU | 2003211918 | A1 | 02-09-2003 |
| | | | EP | 1473445 | A1 | 03-11-2004 |
| | | | WO | 03067043 | A1 | 14-08-2003 |
| | | | JP | 2003227327 | A | 15-08-2003 |
| | | | PL | 364165 | A1 | 13-12-2004 |

EPO FORM P0459

For more details about this annex : see Official Journal of the European Patent Office, No. 12/82

37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10263416 A
- JP 5213681 A
- DE 4341159 A1